# EUROPEAN PATENT APPLICATION

(11) **EP 4 141 983 A1**
(43) Date of publication of application: **01.03.2023**
(21) Application number: 22192456.6
(22) Date of filing: 26.08.2022
(51) Int. Cl.: H01M 4/04, H01M 4/139, H01M 10/04, H01M 4/02

(54) **METHOD OF PRODUCING ELECTRODE AND ELECTRODE PRODUCTION APPARATUS**

(30) Priority: 30.08.2021 JP 2021139778
(71) Applicant: TOYOTA JIDOSHA KABUSHIKI KAISHA, Aichi-Ken 471-8571 (JP)
(72) Inventor: ENOKIHARA, Katsushi, Toyota-shi, 471-8571 (JP); MASHIMO, Naohiro, Toyota-shi, 471-8571 (JP); SHIONOYA, Haruka, Toyota-shi, 471-8571 (JP); KINTSU, Yusuke, Toyota-shi, 471-8571 (JP)
(74) Representative: D Young & Co LLP

(57) **Abstract**

A slurry is prepared by mixing an active material particle, a binder, and a dispersion medium. The slurry is applied to a surface of a substrate to form a first film. The first film is dried to form a second film. A convex die is pressed against a surface of the second film to form a depressed portion in the surface. After the depressed portion is formed, the second film is dried to form an active material layer. In the second film, a solid phase, a liquid phase, and a gas phase form a pendular state or a funicular state.

## Description

This nonprovisional application is based on Japanese Patent Application No. 2021-139778 filed on August 30, 2021, with the Japan Patent Office, the entire contents of which are hereby incorporated by reference.

### BACKGROUND

### Field

The present disclosure relates to a method of producing an electrode and an electrode production apparatus.

### Description of the Background Art

Japanese Patent Laying-Open No. 2015-138619 discloses spraying a solvent to the surface of a negative electrode active material composite material layer before pressing a die having an uneven pattern to the resulting negative electrode active material composite material layer.

### SUMMARY

Forming a depressed portion in the surface of an active material layer has been proposed. The depressed portion is expected to function as, for example, a pathway for electrolyte solution permeation, a pathway for gas discharge, and the like.

An active material layer may be formed by application of a slurry. More specifically, an active material particle, a binder, and a dispersion medium are mixed to prepare a slurry. The slurry is applied to the surface of a substrate to form a film. The film is dried to form an active material layer.

A depressed portion may be formed by embossing work. That is, a convex die is pressed against the surface of an active material layer after the latter is dried, and thereby a depressed portion is formed. In the active material layer after drying, the fluidity of a solid material (such as an active material particle) tends to be low. Because of this, a solid material is compressed at the bottom of the depressed portion, potentially causing a local increase in density. The resulting variations in density in the active material layer may cause inconvenient phenomena such as, for example, nonuniform electrode reaction.

For example, a liquid (a dispersion medium) may be sprayed again to the surface of the active material layer after drying, to give fluidity to the solid material in the surface layer of the active material layer. By this, variations in density resulting from embossing work are expected to be reduced. However, there is room for improvement in releasability. More specifically, when the solid material is wet, adhesion force may be generated; and this may cause the solid material to adhere to the convex die, leading to formation of a depressed portion that is not formed as desired. Further, it seems that the re-sprayed liquid does not permeate into the deepest layer of the active material layer. Therefore, in the deepest layer of the active material layer, the fluidity of the solid material is still low and the variations in density may remain unresolved.

An object of the present disclosure is to provide a method of producing an electrode having a depressed portion.

Hereinafter, the technical configuration and effects of the present disclosure will be described. It should be noted that the action mechanism according to the present specification includes presumption. The action mechanism does not limit the technical scope of the present disclosure.
1. A method of producing an electrode includes the following (a) to (e):
   (a) preparing a slurry by mixing an active material particle, a binder, and a dispersion medium;
   (b) applying the slurry to a surface of a substrate to form a first film;
   (c) drying the first film to form a second film;
   (d) pressing a convex die against a surface of the second film to form a depressed portion in the surface; and
   (e) after forming the depressed portion, drying the second film to form an active material layer, wherein
   in the second film, a solid phase, a liquid phase, and a gas phase form a pendular state or a funicular state.

When the slurry applied to the substrate (a film) is dried, a liquid phase (the dispersion medium) is reduced and a gas phase (air bubbles, voids) is generated. The film will eventually reach a dry state (a solid phase and a gas phase).

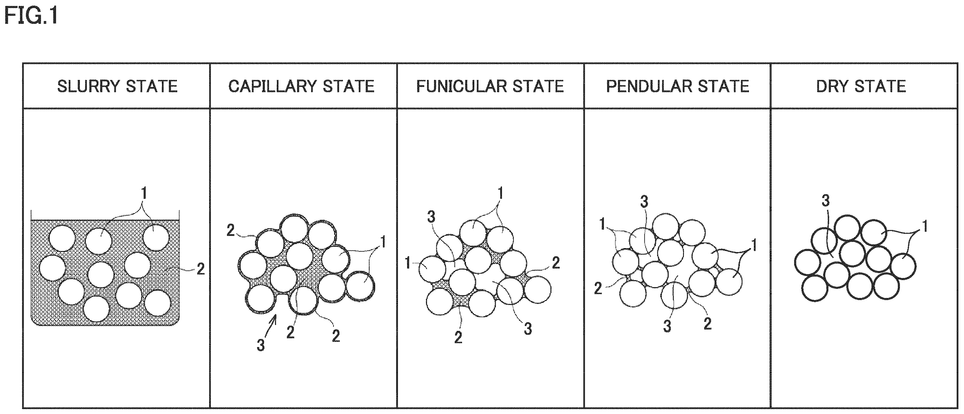

Fig. 1 is a conceptual view illustrating a process of drying a film.

The film passes "a slurry state", "a capillary state", "a funicular state", and "a pendular state" to reach "a dry state". The classification of the degree of dryness is described in detail in "Particle Size Enlargement" written by C. E. CAPES (published by Elsevier Scientific Publishing Company in 1980). The relationship among the solid phase (an active material particle), the liquid phase (a dispersion medium), and the gas phase (a gas) varies depending on the state.

The "slurry state" consists of a solid phase (an active material particle 1) and a liquid phase (a dispersion medium 2). There is substantially no gas phase (a gas 3). The solid phase (active material particle 1) is suspended in the liquid phase (dispersion medium 2). The solid phase is dispersed in the liquid phase and is not contiguous.

The "capillary state" refers to a state in which the amount of the liquid phase is decreased from the slurry state. The capillary state consists of a solid phase, a liquid phase, and a gas phase (gas 3). The solid phase is coated with the liquid phase. The liquid phase is contiguous around the solid phase. The gas phase is in contact with the liquid phase. The gas phase is not in contact with the solid phase.

The "funicular state" is a state in which the amount of the liquid phase is further decreased from the capillary state. The funicular state consists of a solid phase, a liquid phase, and a gas phase. The liquid phase is contiguous around the solid phase. The solid phase is partially in contact with the gas phase.

The "pendular state" is a state in which the amount of the liquid phase is further decreased from the funicular state. The pendular state consists of a solid phase, a liquid phase, and a gas phase. The liquid phase is not contiguous. The liquid phase links a solid phase to another solid phase. The gas phase is in contact with both the solid phase and the liquid phase.

The "dry state" consists of a solid phase and a gas phase. There is substantially no liquid phase.

According to a novel finding of the present disclosure, when the film is in a pendular state or a funicular state, releasability and fluidity may be both attained during embossing work. That is, a film in a pendular state or a funicular state is less likely to adhere to the convex die and is less likely to have variations in density. It may be because a film in a pendular state or a funicular state has a small adhesion force and can flow as an integral whole.

On the other hand, when the film is in a capillary state, for example, the film tends to adhere to the convex die, and when the film is in a dry state, for example, variations in density tend to increase.

2. The slurry may have a solid fraction from 50 to 65% by mass, for example. The second film may have a solid fraction from 70 to 99% by mass, for example.

When the solid fraction is from 50 to 65%, a slurry state tends to be formed. When the solid fraction is from 70 to 99%, a pendular state or a funicular state tends to be formed.

3. The active material particle may include a positive electrode active material, for example. The slurry may have a solid fraction from 55 to 65% by mass, for example. The second film may have a solid fraction from 80 to 99% by mass, for example.

When the active material particle is a positive electrode active material particle, a slurry state tends to be formed at a solid fraction from 55 to 65%, and a pendular state or a funicular state tends to be formed at a solid fraction from 80 to 99%.

4. The active material particle may include a negative electrode active material, for example. The slurry may have a solid fraction from 50 to 60% by mass, for example. The second film may have a solid fraction from 70 to 99% by mass, for example.

When the active material particle is a negative electrode active material particle, a slurry state tends to be formed at a solid fraction from 50 to 60%, and a pendular state or a funicular state tends to be formed at a solid fraction from 70 to 99%.

5. In a plan view, the second film may have a longitudinal direction and a transverse direction. At an end portion of the second film in the transverse direction, a liquid-flowed portion may be formed. The convex die may be pressed against the second film in such a manner that at least part of the liquid-flowed portion does not come into contact with the convex die.

For example, it may be possible to prepare a coating material that is already in a pendular state or a funicular state without passing a slurry state. This coating material may be, for example, a wet powdery and granular material (wet powder or wet granules). The granule is also called a granulated body. The granules may be formed by granulation of powder.

A slurry may have a high fluidity. In a film formed from a slurry, a liquid-flowed portion may be formed at an end portion thereof. At the liquid-flowed portion, the film is inclined outward.

A wet powdery and granular material is less fluid than a slurry. In a film formed from a wet powdery and granular material, an end portion tends not to be inclined. If a film without an inclined portion at its end portion is embossed, a depressed portion is to be formed near the edge of the film. With a depressed portion formed near the edge, the film may peel off or be lost at its end portion.

At the liquid-flowed portion, the thickness of the film gradually decreases toward the outside. Because of this, it is possible to perform embossing work in such a manner that the convex die comes into contact with the film at a central portion of the film and the convex die does not come into contact with the film at an end portion of the film (a liquid-flowed portion). When there is no depressed portion formed at an end portion of the film (a liquid-flowed portion), peeling-off, loss, and/or the like of the film at the end portion of the film is expected to be reduced.

6. The method of producing an electrode may further include, for example, the following (f):
(f) compressing the active material layer.

The film having a depressed portion after drying (the active material layer) may further be compressed.

7. An electrode production apparatus includes a transfer apparatus, an application apparatus, a first drying apparatus, a shaping apparatus, and a second drying apparatus. The transfer apparatus is to transfer a substrate to the application apparatus, the first drying apparatus, the shaping apparatus, and the second drying apparatus in this order. The application apparatus is to apply a slurry to a surface of the substrate to form a first film. The slurry includes an active material particle, a binder, and a dispersion medium. The first drying apparatus is to dry the first film to form a second film. The shaping apparatus is to press a convex die against a surface of the second film to form a depressed portion in the surface. The second drying apparatus is to dry the second film to form an active material layer.

The shaping apparatus carries out embossing work. With the first drying apparatus positioned before the shaping apparatus, the film may be adjusted into a pendular state or a funicular state before embossing work. That is, the method of producing an electrode according to the above "1." may be implemented.

8. The second film may be formed in such a manner that it has a longitudinal direction and a transverse direction in a plan view. The application apparatus may be to form the first film and the first drying apparatus may be to dry the first film, in such a manner that a liquid-flowed portion is formed at an end portion of the second film in the transverse direction.

With a liquid-flowed portion thus formed, peeling-off, loss, and/or the like of the film at the end portion of the film is expected to be reduced.

9. The shaping apparatus may include an embossing roller, for example. The convex die may be formed on a surface of the embossing roller. The shaping apparatus may be to press the embossing roller against the second film in such a manner that at least part of the liquid-flowed portion does not come into contact with the convex die.

The electrode production apparatus according to the above "9." allows for implementing the method of producing an electrode according to the above "5.".

10. The electrode production apparatus may further include a compression apparatus. The transfer apparatus may be to transfer the substrate to the compression apparatus after the substrate passed through the second drying apparatus. The compression apparatus may be to compress the active material layer.

The electrode production apparatus according to the above "10." allows for implementing the method of producing an electrode according to the above "6.".

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a conceptual view illustrating a process of drying a film.
Fig. 2 is a schematic flowchart of a method of producing an electrode according to the present embodiment.
Fig. 3 is a schematic view illustrating an electrode according to the present embodiment.
Fig. 4 is a first schematic cross-sectional view illustrating an electrode according to the present embodiment.
Fig. 5 is a plan view illustrating an electrode according to the present embodiment.
Fig. 6 is a second schematic cross-sectional view illustrating an electrode according to the present embodiment.
Fig. 7 is a conceptual view illustrating an electrode production apparatus according to the present embodiment.
Fig. 8 gives cross-sectional images and top images of electrodes according to a first test example to a third test example.
Fig. 9 is a graph illustrating the relationship between the solid fraction and the drying time in the first test example.
Fig. 10 is a graph illustrating the relationship between the solid fraction and the drying time in the second test example.

### DESCRIPTION OF THE PREFERRED EMBODIMENTS

### <Definitions of Terms, etc.>

Next, an embodiment of the present disclosure (which may also be simply called "the present embodiment") and an example of the present disclosure (which may also be simply called "the present example") will be described. It should be noted that neither the present embodiment nor the present example limits the technical scope of the present disclosure.

Herein, expressions such as "comprise", "include", and "have", and other similar expressions (such as "be composed of", for example) are open-ended expressions. In an open-ended expression, in addition to an essential component, an additional component may or may not be further included. The expression "consist of" is a closed-end expression. However, even when a closed-end expression is used, impurities present under ordinary circumstances as well as an additional element irrelevant to the technique according to the present disclosure are not excluded. The expression "consist essentially of" is a semiclosed-end expression. A semiclosed-end expression tolerates addition of an element that does not substantially affect the fundamental, novel features of the technique according to the present disclosure.

In the method described in the present specification, the order for implementing a plurality of steps, operations, processes, and the like is not limited to the described order, unless otherwise specified. For example, a plurality of steps may proceed simultaneously. For example, a plurality of steps may be implemented in reverse order.

Herein, a singular form also includes its plural meaning, unless otherwise specified. For example, "a particle" may mean not only "one particle" but also "a group of particles (powder, particles)".

Herein, expressions such as "may" and "can" are not intended to mean "must" (obligation) but rather mean "there is a possibility" (tolerance).

Herein, a numerical range such as "from 70 to 99%" includes both the upper limit and the lower limit, unless otherwise specified. That is, "from 70 to 99%" means a numerical range of "not less than 70% and not more than 99%". Moreover, any numerical value selected from a certain numerical range may be used as a new upper limit or a new lower limit. For example, any numerical value from a certain numerical range may be combined with any numerical value described in another location of the present specification or in a table or a drawing, for example, to set a new numerical range.

Herein, all numerical values are regarded as being modified by the term "about". The term "about" may mean ±5%, ±3%, ±1%, and/or the like, for example. Each numerical value is an approximate value that can vary depending on the implementation configuration of the technique according to the present disclosure. Each numerical value is expressed in significant figures. Each measured value may be the average value obtained from multiple measurements performed. The number of measurements may be 3 or more, or may be 5 or more, or may be 10 or more. Each measured value may be rounded off based on the number of the significant figures. Each measured value may include an error occurring due to an identification limit of the measurement apparatus, for example.

Herein, any geometric term (such as "parallel", "vertical", and "perpendicular", for example) should not be interpreted solely in its exact meaning. For example, "parallel" may mean a geometric state that is deviated, to some extent, from exact "parallel". Any geometric term herein may include tolerances and/or errors in terms of design, operation, production, and/or the like. The dimensional relationship in each figure may not necessarily coincide with the actual dimensional relationship. The dimensional relationship (in length, width, thickness, and the like) in each figure may have been changed for the purpose of assisting the understanding of the technique according to the present disclosure. Further, a part of a configuration may have been omitted.

Herein, "in a plan view" refers to viewing a target (such as "an electrode", for example) in a direction parallel to a thickness direction of the target. "In the cross-sectional view" herein refers to viewing a target in a direction perpendicular to a thickness direction of the target.

Herein, when a compound is represented by a stoichiometric composition formula such as "LiCoO₂", for example, this stoichiometric composition formula is merely a typical example. Alternatively, the composition ratio may be non-stoichiometric. For example, when lithium cobalt oxide is represented as "LiCoO₂", the composition ratio of lithium cobalt oxide is not limited to "Li/Co/O = 1/1/2" but Li, Co, and O may be included in any composition ratio, unless otherwise specified. Further, doping with a trace element and/or substitution may also be tolerated.

Herein, "a solid fraction" refers to the mass fraction (percentage) of components other than a liquid in a solid-liquid mixture. The solid fraction may also be called "NV (Nonvolatile content)". In a slurry or in a film, a dispersion medium is a liquid. When a binder is dissolved in the dispersion medium, the binder (a solute) is regarded as a component other than a liquid.

Herein, "D50" refers to a particle size in volume-based particle size distribution at which cumulative frequency of particle sizes accumulated from the small size side reaches 50%. The volume-based particle size distribution may be obtained by measurement with a laser-diffraction particle size distribution analyzer.

### <Method of Producing Electrode>

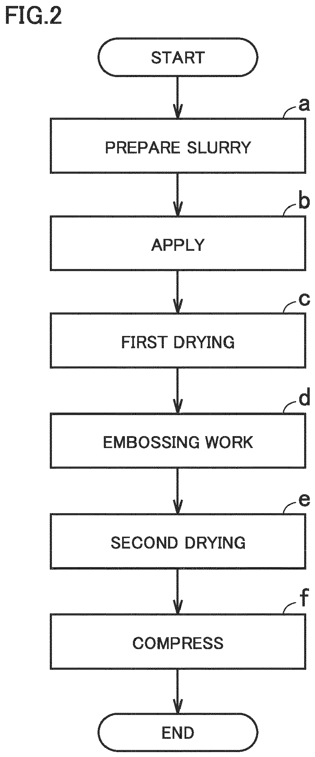

Fig. 2 is a schematic flowchart of a method of producing an electrode according to the present embodiment.

In the following, "a method of producing an electrode according to the present embodiment" may also be simply called "the present production method".

The present production method includes "(a) preparing a slurry", "(b) applying", "(c) first drying", "(d) embossing work", and "(e) second drying". The present production method may further include "(f) compressing", for example. Each step may be carried out in the atmosphere, or may be carried out in dry air and/or the like, for example.

In the present production method, a lithium-ion battery may be produced. However, a lithium-ion battery is merely an example. In the present production method, any battery may be produced. In the present production method, a positive electrode may be produced, or a negative electrode may be produced. In the present production method, at least one of a positive electrode and a negative electrode may be produced.

### «(a) Preparing Slurry»

The present production method includes preparing a slurry by mixing an active material particle, a binder, and a dispersion medium. The slurry is a liquid-state coating material. In the present production method, the slurry may be prepared with the use of any stirring apparatus. For example, a planetary mixer, "High Speed Mixer Series (manufactured by Earthtechnica Co., Ltd.)", and/or the like may be used.

Into a stirring vessel of the stirring apparatus, the active material particle, the binder, and the dispersion medium are added. An optional component (such as a conductive material) may further be added, for example. The materials may be mixed under predetermined conditions to prepare a slurry.

### <Active Material Particle>

The active material particle is a dispersoid in the slurry. The active material particle may have any shape. The active material particle may be in a spherical shape, a lump shape, a flake shape, a columnar shape, and/or the like, for example. The active material particle may have any size. The active material particle may have a D50 from 1 to 30 µm, or may have a D50 from 5 to 20 µm, for example.

The active material particle includes a positive electrode active material or a negative electrode active material. When the active material particle includes a positive electrode active material, a positive electrode may be produced. When the active material particle includes a negative electrode active material, a negative electrode may be produced.

The positive electrode active material is capable of occluding and releasing lithium ions at an electric potential higher than that of the negative electrode active material. The positive electrode active material may include an optional component. The positive electrode active material may include, for example, at least one selected from the group consisting of LiCoO₂, LiNiO₂, LiMnO₂, LiMn₂O₄, Li(NiCoMn)O₂, Li(NiCoAl)O₂, and LiFePO₄. "(NiCoMn)" in "Li(NiCoMn)O₂", for example, means that the constituents within the parentheses are collectively regarded as a single unit in the entire composition ratio. As long as (NiCoMn) is collectively regarded as a single unit in the entire composition ratio, the amounts of individual constituents are not particularly limited. Li(NiCoMn)O₂ may include Li(Ni_{1/3}Co_{1/3}Mn_{1/3})O₂, Li(Ni_{0.5}Co_{0.2}Mn_{0.3})O₂, Li(Ni_{0.8}Co_{0.1}Mn_{0.1})O₂, and/or the like, for example.

The negative electrode active material is capable of occluding and releasing lithium ions at an electric potential lower than that of the positive electrode active material. The negative electrode active material may include an optional component. The negative electrode active material may include, for example, at least one selected from the group consisting of graphite, soft carbon, hard carbon, silicon, silicon oxide, silicon-based alloy, tin, tin oxide, tin-based alloy, and Li₄Ti₅O₁₂.

### <Binder>

The binder is capable of bonding the solid materials to each other. The binder may be soluble in or may be insoluble in the dispersion medium. The amount of the binder to be used may be, for example, from 0.1 to 10 parts by mass relative to 100 parts by mass of the active material particle. The binder may include an optional component. The binder may include, for example, at least one selected from the group consisting of polyvinylidene difluoride (PVDF), polytetrafluoroethylene (PTFE), vinylidene difluoride-hexafluoropropylene copolymer (PVDF-HFP), styrene-butadiene rubber (SBR), carboxymethylcellulose (CMC), polyimide (PI), polyamide-imide (PAI), and polyacrylic acid (PAA).

### <Conductive Material>

Into the slurry, a conductive material may be mixed. The conductive material is capable of forming an electron conduction path in an active material layer. The amount of the conductive material to be used may be, for example, from 0.1 to 10 parts by mass relative to 100 parts by mass of the active material particle. The conductive material may include an optional component. The conductive material may include, for example, at least one selected from the group consisting of carbon black, vapor grown carbon fiber, carbon nanotube, and graphene flake. The carbon black may include, for example, at least one selected from the group consisting of acetylene black, furnace black, channel black, and thermal black.

### <Dispersion Medium>

The dispersion medium is liquid. The dispersion medium may be a solvent for the binder. The dispersion medium may be selected in accordance with the type of the active material particle, the type of the binder, and/or the like, for example. The dispersion medium may include water, N-methyl-2-pyrrolidone (NMP), and/or the like, for example.

The amount of the dispersion medium to be used is adjusted in accordance with the solid fraction of the slurry. The slurry may have a solid fraction from 50 to 65%, for example. When the active material particle includes a positive electrode active material, the slurry may have a solid fraction from 55 to 65%, for example. When the active material particle includes a negative electrode active material, the slurry may have a solid fraction from 50 to 60%, for example. When the solid fraction is within the above ranges, aggregation and sedimentation of the active material particle are less likely to occur and a slurry state tends to be maintained.

### «(b) Applying»

The present production method includes applying the slurry to a surface of a substrate to form a first film. In the present production method, the slurry may be applied with the use of any application apparatus. For example, a die coater, a roll coater, and/or the like may be used.

The slurry has a high fluidity. Because of this, a liquid-flowed portion may be formed in the first film. The liquid-flowed portion may be formed at an end portion in a transverse direction in a plan view. The transverse direction is perpendicular to a longitudinal direction. The longitudinal direction may be the same direction as the direction in which a work is transferred in the application apparatus.

### <Substrate>

The substrate is a support for an active material layer. The substrate may have a sheet-like shape, for example. The substrate may have a belt-like shape, for example. The substrate may be electrically conductive. The substrate may function as a current collector. The substrate may include a metal foil and/or the like, for example. The substrate may include, for example, at least one selected from the group consisting of an aluminum (Al) foil, an Al alloy foil, a copper (Cu) foil, a Cu alloy foil, a nickel (Ni) foil, a Ni alloy foil, a titanium (Ti) foil, and a Ti alloy foil. When the electrode is a positive electrode, the substrate may include an Al foil and/or the like, for example. When the electrode is a negative electrode, the substrate may include a Cu foil and/or the like, for example. The substrate may have a thickness from 5 to 50 µm, or may have a thickness from 5 to 20 µm, for example.

### <<(c) First Drying>>

The present production method includes drying the first film to form a second film. This first drying may also be called "preliminary drying", for example. In the first drying, any drying apparatus may be used. For example, a hot air drying apparatus, an infrared drying apparatus, and/or the like may be used.

In the present production method, drying conditions are adjusted in such a manner that a solid phase, a liquid phase, and a gas phase form a pendular state or a funicular state in the second film. The drying conditions may include the drying temperature, the drying time, and/or the like, for example. The degree of dryness of the second film is checked by the method described below.

### <Method for Checking Degree of Dryness>

In a plan view, the second film has a longitudinal direction and a transverse direction. The longitudinal direction may be the same direction as the direction in which a work is transferred within the drying apparatus. The transverse direction may also be called "a widthwise direction". The second film is divided into five equal regions in the transverse direction. Near the center of each region, a sample (a second film) is cut out together with the substrate, with the use of, for example, a box cutter and/or the like. That is, five samples are prepared.

A Cryo-SEM (Cryo Scanning Electron Microscopy) is prepared.

The sample is quickly frozen in liquid nitrogen in the atmosphere. Desirably, the time between first drying and quick freezing does not exceed 10 minutes. After freezing, the sample is introduced into a Cryo chamber. In the Cryo chamber, the sample is subjected to cross section machining. After the cross section machining, the sample is introduced onto a cooling stage. On the cooling stage, the sample is observed by SEM. The magnification for the observation may be from 1000 to 5000 times.

In an SEM image, "an active material particle whose surface is partially covered with the dispersion medium" is regarded as being in a pendular state or a funicular state. In other words, any active material particle other than the below (i) and (ii) is regarded as being in a pendular state or a funicular state.
(i) "An active material particle whose entire surface is covered with the dispersion medium"
(ii) "An active material particle whose entire surface is covered with a gas phase (voids)"

In an SEM image of each sample, the state of 20 or more active material particles, respectively, is checked. In other words, the state of a total of 100 or more active material particles, respectively, is checked. The greater the number of checked particles is, the more improved the reliability of the measurement results is considered to be. When 50% (by number) or more of the active material particles are in a pendular state or a funicular state, it is considered that a solid phase, a liquid phase, and a gas phase form a pendular state or a funicular state in the second film.

For example, 70% (by number) or more of the active material particles may be in a pendular state or a funicular state. For example, 80% (by number) or more of the active material particles may be in a pendular state or a funicular state.

### <Solid Fraction>

The solid fraction of the second film may be checked. For example, a sample (the second film) is cut out together with the substrate. The area of the sample may be from 10 to 50 cm², for example. The mass of the sample in a wet state and the mass of the sample in a dry state are measured. From the difference between the mass in a wet state and the mass in a dry state, the mass of the dispersion medium is determined. Further, from the mass of the dispersion medium, the solid fraction is determined.

The second film may have a solid fraction from 70 to 99%, for example. At a solid fraction from 70 to 99%, a pendular state or a funicular state tends to be formed.

When the active material particle includes a positive electrode active material, the second film may have a solid fraction from 80 to 99%, for example. When the active material particle includes a positive electrode active material, at a solid fraction from 80 to 99%, a pendular state or a funicular state tends to be formed. When the active material particle includes a positive electrode active material, the second film may have a solid fraction from 81 to 97%, for example.

When the active material particle includes a negative electrode active material, the second film may have a solid fraction from 70 to 99%, for example. When the active material particle includes a negative electrode active material, at a solid fraction from 70 to 99%, a pendular state or a funicular state tends to be formed. When the active material particle includes a negative electrode active material, the second film may have a solid fraction from 72 to 96%, for example.

### <<(d) Embossing Work>>

The present production method includes pressing a convex die against a surface of the second film to form a depressed portion in the surface.

In the embossing work, an embossing roller and/or the like may be used, for example. In the present production method, the second film (the subject to be worked) is in a pendular state or a funicular state. Because of this, the second film may have a good releasability. In other words, the second film (the material) is less likely to adhere to the convex die. Further, the area of contact with the convex die as well as the surrounding area thereof can flow as a whole, and therefore variations in density may be reduced. Another advantage is that the necessary load for shaping may be smaller than in a dry state.

In the present production method, one or more depressed portions are formed. A plurality of depressed portions may be formed. When a plurality of depressed portions are formed, an uneven structure may be formed on the surface of the second film. Individual depressed portions may have a linear shape, a curved shape, a wavy shape, or a dot-like shape, for example. The planar pattern of the depressed portions may be a parallel-line pattern or a grid-like pattern, for example.

### <<(e) Second Drying>>

The present production method includes, after forming the depressed portion, drying the second film to form an active material layer.

This second drying may also be called "final drying", for example. In the second drying, the second film is dried into a dry state (see Fig. 1). By this, an active material layer (a film in a dry state) is formed. Also in the second drying, any drying apparatus may be used. For example, a hot air drying apparatus, an infrared drying apparatus, and/or the like may be used.

### <<(f) Compressing>>

The present production method may include compressing the active material layer. By compressing, the thickness and the density of the active material layer may be adjusted. For example, a roll press apparatus may be used to compress the active material layer.

In the above manner, an electrode (a raw sheet) may be produced. The raw sheet may be cut into a predetermined shape in accordance with the battery specifications.

### <Electrode>

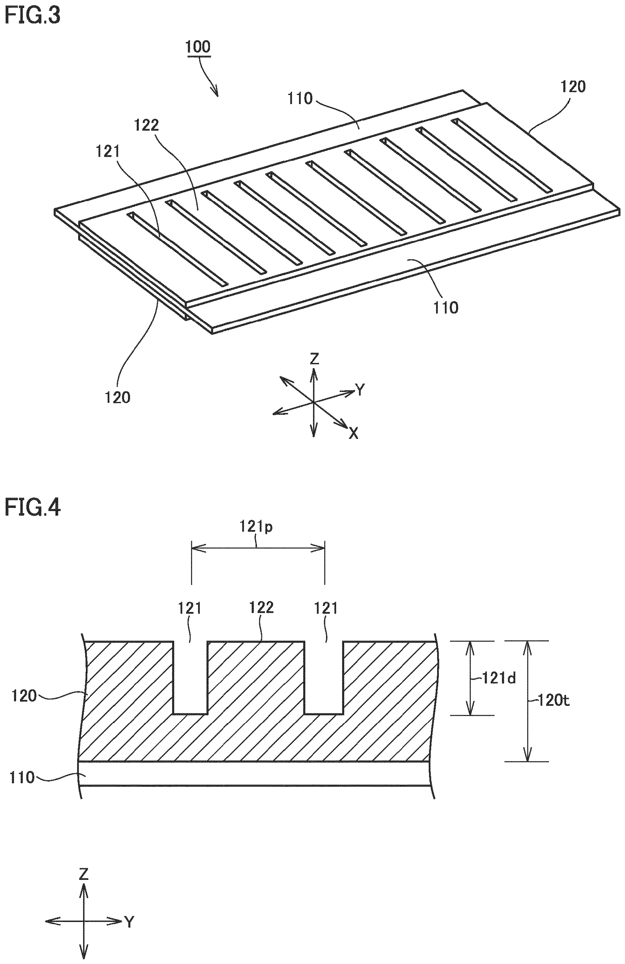

Fig. 3 is a schematic view illustrating an electrode according to the present embodiment.

An electrode 100 includes a substrate 110 and an active material layer 120. The details of substrate 110 are as described above. Active material layer 120 is formed on the surface of substrate 110. Active material layer 120 may be formed on only one side of substrate 110. Active material layer 120 may be formed on both sides of substrate 110. Active material layer 120 may have a thickness from 10 to 1000 µm, or may have a thickness from 50 to 500 µm, or may have a thickness from 100 to 200 µm, for example.

Active material layer 120 includes an active material particle and a binder. Active material layer 120 may further include a conductive material and/or the like, for example. The details of the materials are as described above. In the surface of active material layer 120, a depressed portion 121 (a groove) is formed. Only a single depressed portion 121 may be formed, or a plurality of depressed portions 121 (grooves) may be formed.

Fig. 4 is a first schematic cross-sectional view illustrating an electrode according to the present embodiment.

The cross-sectional profile of depressed portion 121 is not limited. In a cross-sectional view, the bottom of depressed portion 121 may be flat, or may be curved, or may be inclined, for example. In a cross-sectional view, depressed portion 121 may be V-shaped, or may be U-shaped, for example.

A pitch 121p of depressed portion 121 refers to the distance between the deepest points of adjacent depressed portions 121. When the bottom of depressed portion 121 is flat, the center of the bottom is regarded as the deepest point. Pitch 121p may be from 0.1 to 10 mm, or may be from 0.5 to 5 mm, or may be from 1 to 3 mm, for example.

A depth 121d of depressed portion 121 refers to a depth from the surface of active material layer 120 (the vertex of a projected portion 122) to the deepest point of the depressed portion 121. Depth 121d may be from 10 to 150 µm, or may be from 50 to 100 µm, for example. The ratio of depth 121d of depressed portion 121 to a thickness 120t of active material layer 120 may be from 0.1 to 0.9, or may be from 0.2 to 0.8, or may be from 0.3 to 0.7, for example.

Projected portion 122 is formed between a depressed portion 121 and another depressed portion 121. In the present embodiment, variations in density (namely, the difference in density) between depressed portion 121 and projected portion 122 is expected to be small. For example, the ratio of the density of active material particles in projected portion 122 to the density of active material particles in depressed portion 121 may be from 0.7 to 1.0, or may be from 0.8 to 1.0, or may be from 0.9 to 1.0. For example, in a cross-sectional SEM image of active material layer 120, the ratio of the area occupied by the active material particles included in depressed portion 121 to the area of the depressed portion 121 may be regarded as the density in the depressed portion 121. For example, the ratio of the area occupied by the active material particles included in projected portion 122 to the area of the projected portion 122 may be regarded as the density in the projected portion 122.

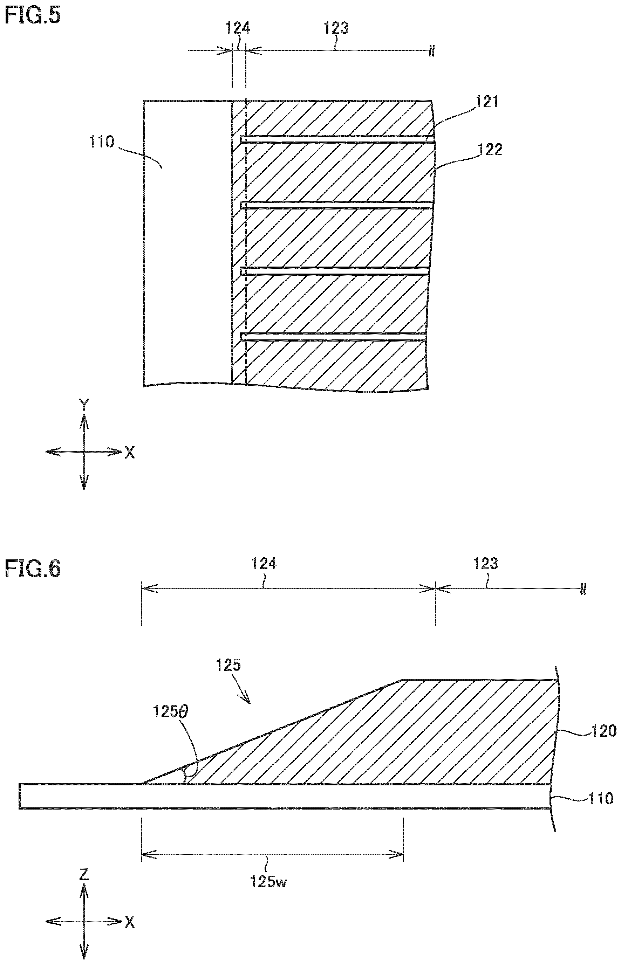

Fig. 5 is a plan view illustrating an electrode according to the present embodiment.

In a plan view (in the XY plane), active material layer 120 has a longitudinal direction (Y-axis direction) and a transverse direction (X-axis direction). The longitudinal direction may also be called "a lengthwise direction". The transverse direction may also be called "a widthwise direction". Depressed portion 121 and projected portion 122 extend in the transverse direction. However, depressed portion 121 and projected portion 122 may extend in the longitudinal direction, for example.

In the transverse direction (X-axis direction), active material layer 120 includes a central portion 123 and an end portion 124. End portion 124 is connected to central portion 123. End portion 124 may be formed on both sides of central portion 123, or may be formed on only one side of it. The width of end portion 124 (one side) may be from 0.001 to 10 mm, or may be from 0.01 to 5 mm, or may be from 0.1 to 3 mm, for example. Central portion 123 may have any width. The ratio of the width of end portion 124 (one side) to the width of central portion 123 may be from 0.001 to 0.05, for example.

Fig. 6 is a second schematic cross-sectional view illustrating an electrode according to the present embodiment.

End portion 124 may include a liquid-flowed portion 125, for example. Liquid-flowed portion 125 may also be called "an inclined portion", for example. At liquid-flowed portion 125, active material layer 120 is inclined. More specifically, at liquid-flowed portion 125, the thickness of active material layer 120 gradually decreases toward the outside. The angle 125θ of inclination of liquid-flowed portion 125 may be from 1 to 60 degrees, or may be from 1 to 30 degrees, for example. The width 125w of liquid-flowed portion 125 may be from 0.1 to 3 mm, or may be from 0.5 to 2 mm, for example.

For example, as a result of the convex die not reaching liquid-flowed portion 125, depressed portion 121 may not be formed for at least part of liquid-flowed portion 125. This is expected to reduce peeling-off and/or loss of active material layer 120 at end portion 124, for example. In the transverse direction, the distance between the edge of liquid-flowed portion 125 and the edge of depressed portion 121 may be from 0.1 to 3 mm, or may be from 0.5 to 2 mm, for example.

### <Electrode Production Apparatus>

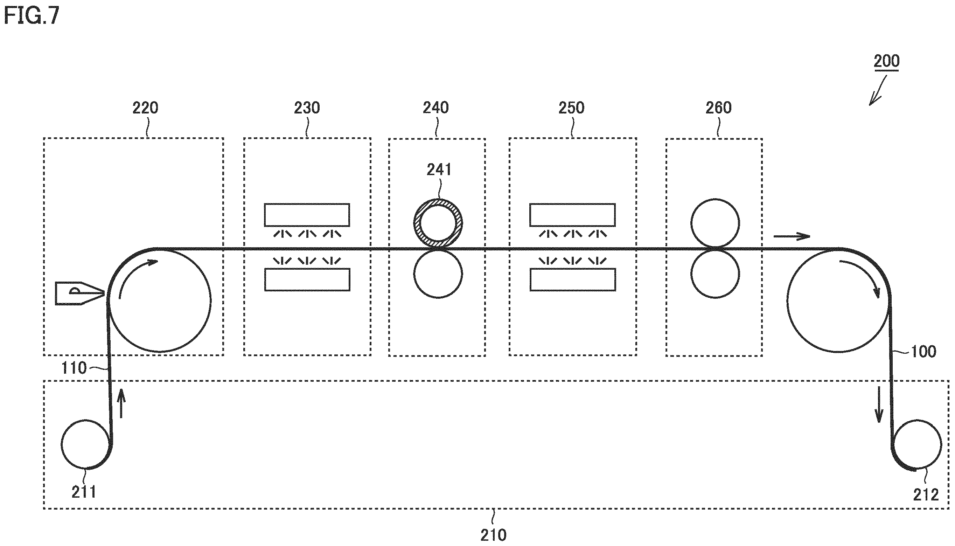

Fig. 7 is a conceptual view illustrating an electrode production apparatus according to the present embodiment.

In an electrode production apparatus 200, the present production method may be implemented. In electrode production apparatus 200, an electrode may be produced by a roll-to-roll manner. Electrode production apparatus 200 includes a transfer apparatus 210, an application apparatus 220, a first drying apparatus 230, a shaping apparatus 240, and a second drying apparatus 250. Electrode production apparatus 200 may further include a compression apparatus 260 and/or the like, for example.

Electrode production apparatus 200 may further include a mixing apparatus (not illustrated) and/or the like, for example. The mixing apparatus is capable of preparing the slurry, for example. Electrode production apparatus 200 may further include a cutting apparatus (not illustrated) and/or the like, for example. The cutting apparatus is capable of cutting the compressed electrode into a predetermined shape, for example. Electrode production apparatus 200 may further include is a control apparatus (not illustrated) and/or the like, for example. The control apparatus is capable of controlling the operation of and the coordination between the apparatuses, for example.

### «Transfer Apparatus»

Transfer apparatus 210 transfers substrate 110. Transfer apparatus 210 may include a feed roller 211 and a take-up roller 212, for example. For instance, feed roller 211 feeds (or sends out) substrate 110. Take-up roller 212 takes up substrate 110 (electrode 100). Substrate 110 may pass through application apparatus 220, first drying apparatus 230, shaping apparatus 240, second drying apparatus 250, and compression apparatus 260 in this order.

### «Application Apparatus»

Application apparatus 220 applies the slurry to a surface of substrate 110. Thus, a first film may be formed. Application apparatus 220 is capable of applying the slurry in any manner. Application apparatus 220 may include a die coater, a roll coater, and/or the like, for example. The first film may be formed in such a manner that the second film has a liquid-flowed portion. For example, the coating weight, viscosity, and/or the like of the slurry may be changed to adjust the degree of inclination, width, and the like of the liquid-flowed portion.

### «First Drying Apparatus»

First drying apparatus 230 dries the first film to form a second film. First drying apparatus 230 is capable of drying the first film in such a manner that the resulting second film has a liquid-flowed portion. For example, drying conditions (the drying temperature, the drying time, and/or the like) may be changed to adjust the degree of inclination, width, and the like of the liquid-flowed portion. First drying apparatus 230 is capable of drying the first film by any method. First drying apparatus 230 may include a hot air drying apparatus, an infrared drying apparatus, and/or the like, for example. The drying conditions are adjusted in such a manner that a solid phase, a liquid phase, and a gas phase in the second film form a pendular state or a funicular state.

### «Shaping Apparatus»

Shaping apparatus 240 presses a convex die against a surface of the second film to form a depressed portion in the surface. Shaping apparatus 240 may include an embossing roller 241 and/or the like, for example. In the surface of embossing roller 241, one or more convex dies are formed. In accordance with the pattern of the convex die, the depressed portion(s) may be formed. On a surface of embossing roller 241, a ceramic layer may be formed, for example. The convex die may be formed in the ceramic layer. When the part of contact with the active material layer is a ceramic layer, foreign metal contamination into the active material layer may be reduced, for example. The ceramic layer may include alumina, titania, and/or the like, for example. The convex die may be formed in the ceramic layer by, for example, laser engraving. For example, the height and/or the like of the convex die may be changed to adjust the depth of the depressed portion. The convex die may have a height from 50 to 200 µm, for example. The core of embossing roller 241 may be formed with stainless steel material and/or the like, for example.

### «Second Drying Apparatus»

Second drying apparatus 250 dries the second film to form an active material layer. Second drying apparatus 250 is capable of drying the second film by any method. Second drying apparatus 250 may include a hot air drying apparatus, an infrared drying apparatus, and/or the like, for example. The drying conditions are adjusted in such a manner that the active material layer turns into a dry state.

### «Compression Apparatus»

Compression apparatus 260 compresses the active material layer. Compression apparatus 260 is capable of compressing the active material layer by any method. Compression apparatus 260 may include a roll press apparatus and/or the like, for example.

### [Examples]

Next, the present example is described.

### <First Test Example>

In a first test example, a positive electrode was produced.

### «(a) Preparing Slurry»

The below materials were prepared.
Active material particle: Li(Ni_{1/3}Co_{1/3}M_{1/3})O₂
Conductive material: acetylene black
Binder: PVDF
Dispersion medium: NMP

As a stirring apparatus, a planetary mixer was prepared. Into a stirring vessel of the stirring apparatus, 90 parts by mass of the active material particle, 2 parts by mass of the binder, and 8 parts by mass of the conductive material were added. Into the stirring vessel, the dispersion medium was further added so that the solid fraction of the resulting slurry became 62.5%. The materials were mixed in the stirring vessel, and thereby a slurry was prepared.

### «(b) Applying»

As a substrate, an Al foil was prepared. As an application apparatus, a die coater was prepared. The slurry was applied to the surface of the substrate, and thereby a first film was formed.

### «(c) First Drying»

The first film (initial solid fraction, 62.5%) was dried, and thereby a second film was formed. The solid fraction of the second film was 80%. By the method described above, the degree of dryness of the second film was checked. In the second film, a solid phase, a liquid phase, and a gas phase formed a pendular state or a funicular state. The target thickness of the second film was 150 µm.

### <<(d) Embossing Work>>

An embossing roller was used to form depressed portions in the surface of the second film. The convex dice had a height of 100 µm. The depressed portions were formed in a pattern of parallel lines. In other words, in a plan view, the multiple parallel lines formed an uneven structure. Each of the depressed portions extended in a transverse direction (in a widthwise direction) of the second film. The depressed portions had a pitch of 1 mm. The linear pressure was 40 N/cm.

### <<(e) Second Drying>>

After the depressed portions were formed, the second film was dried, and thereby an active material layer was formed.

### <<(f) Compressing>>

A roll press apparatus was used to compress the active material layer. The linear pressure was 4 t/cm. Thus, an electrode (a positive electrode) was produced.

### <Second Test Example>

In a second test example, a negative electrode was produced.

### «(a) Preparing Slurry»

The below materials were prepared.
Active material particle: graphite
Binder: CMC, SBR
Dispersion medium: water

As a stirring apparatus, a planetary mixer was prepared. Into a stirring vessel of the stirring apparatus, 98 parts by mass of the active material particle and 2 parts by mass of the binder (1 part by mass of CMC and 1 part by mass of SBR) were added. Into the stirring vessel, the dispersion medium was further added so that the solid fraction of the resulting slurry became 60%. The materials were mixed in the stirring vessel, and thereby a slurry was prepared.

### «(b) Applying»

As a substrate, a Cu foil was prepared. As an application apparatus, a die coater was prepared. The slurry was applied to the surface of the substrate, and thereby a first film was formed.

### «(c) First Drying»

The first film (initial solid fraction, 60%) was dried, and thereby a second film was formed. The solid fraction of the second film was 72%. By the method described above, the degree of dryness of the second film was checked. In the second film, a solid phase, a liquid phase, and a gas phase formed a pendular state or a funicular state.

### <<(d) Embossing Work>>

An embossing roller was used to form depressed portions in the surface of the second film. The depressed portions were formed in a pattern of parallel lines. Each of the depressed portions extended in a transverse direction (in a widthwise direction) of the second film. The depressed portions had a pitch of 1 mm. The linear pressure was 40 N/cm.

### <<(e) Second Drying>>

After the depressed portions were formed, the second film was dried, and thereby an active material layer was formed.

### <<(f) Compressing>>

A roll press apparatus was used to compress the active material layer. The linear pressure was 1 t/cm. Thus, an electrode (a negative electrode) was produced.

### «Third Test Example»

In a third test example, a positive electrode was produced. In the third test example, the slurry was replaced by a wet powdery and granular material to form a film. The same materials as in the first test example were used.

As a stirring apparatus, a High Speed Mixer (manufactured by Earthtechnica Co., Ltd.) was prepared. Into a stirring vessel of the stirring apparatus, 90 parts by mass of the active material particle, 2 parts by mass of the binder, and 8 parts by mass of the conductive material were added. In the stirring vessel, the solid materials were mixed for 15 seconds. The number of revolutions of the mixing blades was 4500 rpm. After mixing, a liquid (NMP) was added so that the solid fraction became 90%. After the addition of the liquid, the materials were mixed for 30 seconds in the stirring vessel. The number of revolutions of the mixing blades was 300 rpm. The materials were mixed for another 2 seconds, and thereby the materials became finer. The number of revolutions of the mixing blades was 4500 rpm.

As an application apparatus, a roll coater was prepared. The wet powdery and granular material was compacted at the roller gap, and thereby a sheet-shape green body was formed. The green body was transferred to the surface of the substrate, and thereby a film was formed. A spatula-type scraper jig was used to shape the end portion of the film as intended. Then, embossing work, drying, and compression were carried out in the same manner as in the first test example, and thereby an electrode (a positive electrode) was produced.

### <Results>

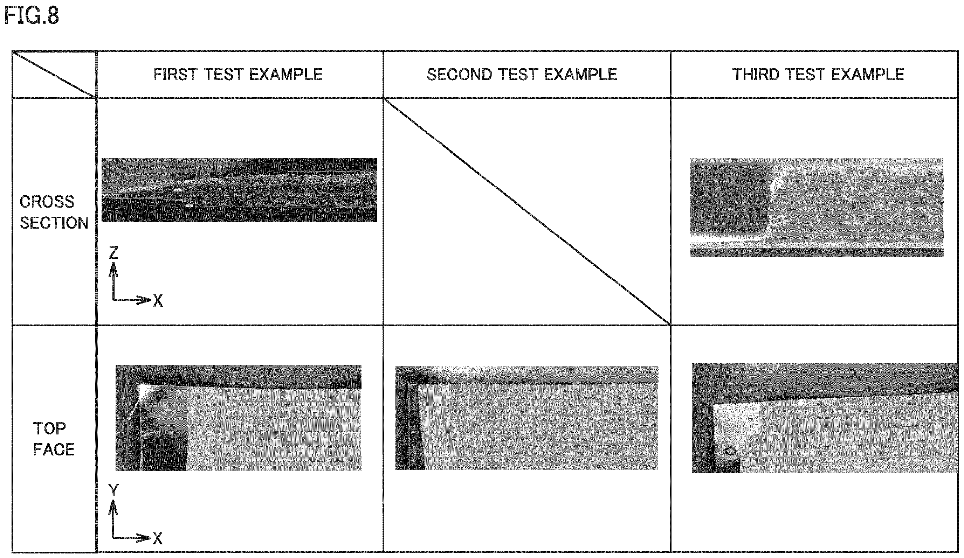

Fig. 8 gives cross-sectional images and top images of the electrodes according to the first test example to the third test example.

In the first test example and the second test example, slurry application was employed to form an active material layer. As seen in the cross-sectional image, liquid-flowed portions (inclined portions) were formed at an end portion in a transverse direction (in the X-axis direction). The liquid-flowed portions were formed across the range of about 1 mm.

In the third test example, a wet powdery and granular material was used to form an active material layer. In addition, an end portion of the film in a transverse direction (in the X-axis direction) was scraped off. As seen in the cross-sectional image, in the third test example, almost no liquid-flowed portion is seen. In the third test example, the displacement between the top face and the bottom face of the active material layer was about 20 µm.

As seen in the top images, in the first test example and the second test example, the depressed portions do not reach the edge in the transverse direction (in the X-axis direction). It may be because liquid-flowed portions are formed at the end portion in the transverse direction in the first test example and the second test example. There is no peeling-off, loss, or the like of the active material layer (the film) seen at the end portion in the transverse direction.

As seen in the top image, in the third test example, depressed portions extend to reach near the edge in the transverse direction. It may be because no liquid-flowed portion is formed. In the third test example, peeling-off and loss of the active material layer occurred at the end portion in the transverse direction.

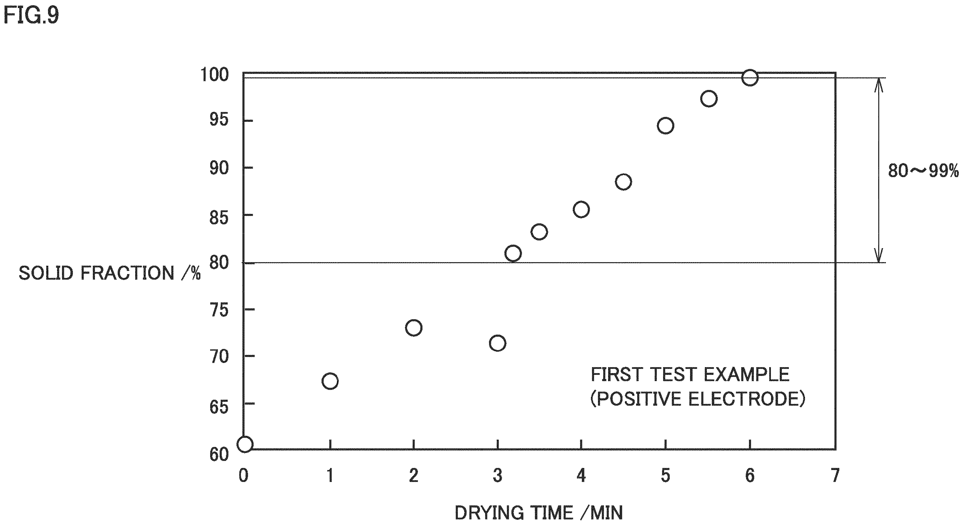

Fig. 9 is a graph illustrating the relationship between the solid fraction and the drying time in the first test example.

The horizontal axis in Fig. 9 is the drying time in "(c) first drying". The vertical axis in Fig. 9 is the solid fraction immediately after "(c) first drying". In the first test example (a positive electrode), at a solid fraction from 80 to 99%, formation of a pendular state or a funicular state was seen. At a solid fraction from 80 to 99%, rough-shape depressed portions were formed. The depth of the depressed portions was from 60 to 80 µm. At a solid fraction less than 80%, the material adhered to the convex dice and it was difficult to form rough-shape depressed portions.

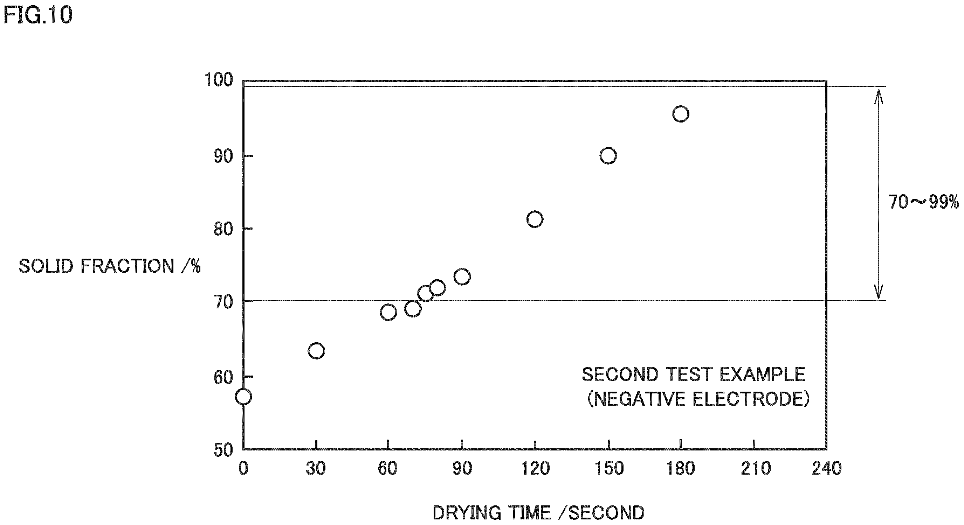

Fig. 10 is a graph illustrating the relationship between the solid fraction and the drying time in the second test example.

The horizontal axis in Fig. 10 is the drying time in "(c) first drying". The vertical axis in Fig. 10 is the solid fraction immediately after "(c) first drying". In the second test example (a negative electrode), at a solid fraction from 70 to 99%, formation of a pendular state or a funicular state was seen. At a solid fraction from 70 to 99%, rough-shape depressed portions were formed. The depth of the depressed portions was from 70 to 80 µm. At a solid fraction less than 70%, the material adhered to the convex dice and it was difficult to form rough-shape depressed portions.

### <Additional Statement>

The present embodiment and the present example also disclose an "electrode" described below.

An electrode comprising:
a substrate; and
an active material layer, wherein
the active material layer is formed on a surface of the substrate,
the active material layer includes an active material particle and a binder,
on a surface of the active material layer, a depressed portion and a projected portion are formed,
a ratio of a density of the active material particle in the projected portion to a density of the active material particle in the depressed portion is from 0.7 to 1.0,
in a plan view, the active material layer has a longitudinal direction and a transverse direction, and
at an end portion of the active material layer in the transverse direction, an inclined portion (a liquid-flowed portion) is formed.

The electrode, wherein
the depressed portion extends in the transverse direction, and
the depressed portion does not reach an edge of the inclined portion (the liquid-flowed portion).

The present embodiment and the present example are illustrative in any respect. The present embodiment and the present example are non-restrictive. The technical scope of the present disclosure encompasses any modifications within the meaning and the scope equivalent to the terms of the claims. For example, it is expected that certain configurations of the present embodiments and the present examples can be optionally combined.

## Claims

1. A method of producing an electrode, the method comprising:
(a) preparing a slurry by mixing an active material particle (1), a binder, and a dispersion medium (2);
(b) applying the slurry to a surface of a substrate (110) to form a first film;
(c) drying the first film to form a second film;
(d) pressing a convex die against a surface of the second film to form a depressed portion (121) in the surface; and
(e) after forming the depressed portion (121), drying the second film to form an active material layer (120), wherein
in the second film, a solid phase, a liquid phase, and a gas phase form a pendular state or a funicular state.

2. The method of producing an electrode according to claim 1, wherein
the slurry has a solid fraction from 50 to 65% by mass, and
the second film has a solid fraction from 70 to 99% by mass.

3. The method of producing an electrode according to claim 1 or 2, wherein
the active material particle (1) includes a positive electrode active material,
the slurry has a solid fraction from 55 to 65% by mass, and
the second film has a solid fraction from 80 to 99% by mass.

4. The method of producing an electrode according to claim 1 or 2, wherein
the active material particle (1) includes a negative electrode active material,
the slurry has a solid fraction from 50 to 60% by mass, and
the second film has a solid fraction from 70 to 99% by mass.

5. The method of producing an electrode according to any one of claims 1 to 4, wherein
in a plan view, the second film has a longitudinal direction and a transverse direction,
at an end portion of the second film in the transverse direction, a liquid-flowed portion is formed, and
the convex die is pressed against the second film in such a manner that at least part of the liquid-flowed portion does not come into contact with the convex die.

6. The method of producing an electrode according to any one of claims 1 to 5, wherein the method further comprises:
(f) compressing the active material layer.

7. An electrode production apparatus comprising:
a transfer apparatus (210);
an application apparatus (220);
a first drying apparatus (230);
a shaping apparatus (240); and
a second drying apparatus (250), wherein
the transfer apparatus (210) is to transfer a substrate (110) to the application apparatus (220), the first drying apparatus (230), the shaping apparatus (240), and the second drying apparatus (250) in this order,
the application apparatus (220) is to apply a slurry to a surface of the substrate (110) to form a first film,
the slurry includes an active material particle (1), a binder, and a dispersion medium (2),
the first drying apparatus (230) is to dry the first film to form a second film,
the shaping apparatus (240) is to press a convex die against a surface of the second film to form a depressed portion (121) in the surface, and
the second drying apparatus (250) is to dry the second film to form an active material layer (120).

8. The electrode production apparatus according to claim 7, wherein
the second film is formed to have a longitudinal direction and a transverse direction in a plan view, and
the application apparatus (220) is to form the first film and the first drying apparatus (230) is to dry the first film, in such a manner that a liquid-flowed portion is formed at an end portion of the second film in the transverse direction.

9. The electrode production apparatus according to claim 8, wherein
the shaping apparatus (240) includes an embossing roller (241),
the convex die is formed on a surface of the embossing roller, and
the shaping apparatus (240) is to press the embossing roller against the second film in such a manner that at least part of the liquid-flowed portion does not come into contact with the convex die.

10. The electrode production apparatus according to any one of claims 7 to 9, wherein
the electrode production apparatus further comprises a compression apparatus (260),
the transfer apparatus (210) is to transfer the substrate (110) to the compression apparatus (260) after the substrate passed through the second drying apparatus (250), and
the compression apparatus (260) is to compress the active material layer (120).
